# EUROPÄISCHE PATENTSCHRIFT

(11) **EP 0 398 041 B1**
(45) Veröffentlichungstag und Bekanntmachung des Hinweises auf die Patenterteilung: **27.12.1995**
(21) Anmeldenummer: 90107681.0
(22) Anmeldetag: 23.04.1990
(51) Int. Cl.: H04Q 11/04, H04M 3/24

(54) **Vermittlungsstelle mit einer Schaltungsanordnung zur Prüfung der Sprechwegedurchschaltung einer Koppelanordnung**
Switch with a circuit arrangement for testing the speech path interconnection of a coupling device
Central de commutation avec un montage pour tester l'interconnexion du chemin de parole d'un dispositif de couplage

(30) Priorität: 16.05.1989 DE 3915927
(43) Veröffentlichungstag der Anmeldung: 22.11.1990
(73) Patentinhaber: SIEMENS AKTIENGESELLSCHAFT, 80333 München (DE)
(72) Erfinder: Nagler, Werner, Dipl.-Ing., D-8021 Schäftlarn (DE); Kaderka, Rostislav, Dipl.-Ing., D-8039 Germering (DE); Marnet, Frank, Dipl.-Ing., D-8000 München (DE)

(56) Entgegenhaltungen:
- EP-A- 0 171 803
- EP-A- 0 419 960
- DE-A- 2 905 426
- US-A- 4 156 110
- PATENT ABSTRACTS OF JAPAN vol. 11, no. 23 (E-473)(2470) 22. Januar 1987 & JP-A-61 194 962
- PATENT ABSTRACTS OF JAPAN vol. 9, no. 280 (E-356)(2003) 8. November 1985 & JP-A-60 121 862

## Beschreibung

Die Erfindung betrifft eine digitale Zeitmultiplex-Fernsprech-Vermittlungsstelle mit einer Schaltungsanordnung zur Prüfung der Sprechwegedurchschlaltung einer Koppelanordnung gemäß dem Oberbegriff des Patentanspruchs 1.

Bei einer bekannten Zeitmultiplex-Vermittlungsstelle mit der obengenannten Anschlußstruktur ("EWSD Anschlußgruppen LTG"; Siemens Druckschrift A 30 808-X 2720-X-1-18) sind sämtliche Baueinheiten einer solchen Anschlußgruppe mit der Gruppensteuerung über eine Zeitmultiplexleitung verbunden. Die auf dieser Zeitmultiplexleitung gebildeten 32 Zeitkanäle sind den einzelnen Baueinheiten zugeordnet, die demnach jeweils nur über diese Zeitkanäle mit der Gruppensteuerung in Signalaustausch treten können. Außerdem sind auf dieser Zeitmultiplexleitung zusätzliche Prüfkanäle gebildet, auf denen über einen gesonderten Anschluß der Koppelanordnung die vermittlungstechnischen Funktionen derselben geprüft werden. Es werden in diesem Zusammenhang durch die Koppelanordnung Prüfverbindungen durchgeschaltet und bestimmte Prüfbitmuster gesendet und empfangsseitig auf Fehlerfreiheit überprüft.

Ein wesentlicher Nachteil dieses Prüfkonzepts liegt in der großen dynamischen Belastung der die genannten Prozeduren steuernden Gruppensteuerung mit der Folge, daß diese Prüfungen nur selten durchgeführt werden können und damit es bis zu einer Fehlererkennung relativ lange dauern kann. Außerdem stößt die Fehlerlokalisierung auf große Schwierigkeiten.

Auch bei einer anderen bekannten Vermittlungsstelle (PATENT ABSTRACTS OF JAPAN vol. 11, no. 23 (E-473) (2470) 22.Januar 1987 & JP-A-61 194 962 (NEC). Wird eine der Abwicklung der Fernsprechvermittlungsprozeduren dienende Steuerung für die Steuerung der Prüfungsprozeduren mitausgenutzt und dementsprechend belastet. Hinzu kommt, daß der Anschluß der spezifisch für die Durchführung der Prüfung vorgesehenen Anordnungsteile in Form einer Prüfmusterüberwachung und einer Prüfmusterübertragung Änderungen der Anschlußstruktur bei der Koppelanordnung der Vermittlungsstelle erfordern, zu welchem Zweck eine gesonderte Prüfmustereinfügeschaltung und eine Prüfmusterextraktionsschaltung vorgesehen sind.

Die Aufgabe der Erfindung besteht nun darin, ein diesbezüglich günstigeres Konzept anzugeben.

Die Lösung dieser Aufgabe erfolgt mit einer Zeitmultiplex-Fernsprechvermittlungsstelle der eingangs genannten Art, die die im Kennzeichen des Patentanspruchs 1 angegebenen Merkmale aufweist.

Bei der erfindungsgemäßen Zeitmultiplex-Fernsprechvermittlungsstelle ist demnach eine gesonderte und demnach steuerungsmäßig weitgehend eigenständige Prüfbaugruppe vorgesehen, die in einer Prüfschleife liegt, die in derselben Weise an die zu überprüfende Koppelanordnung angeschlossen ist, wie die Mithilfe der Koppelanordnung durchzuschaltenden Teilnehmeranschluß- und/oder Verbindungsleitungen. Es wird damit einerseits die Vermittlungssteuerung durch die Prüfprozeduren nicht belastet, andererseits erfordert der Anschluß einer solchen Prüfbaugruppe keinen besonderen schaltungsmäßigen Aufwand.

Weitere Ausgestaltungen der Erfindung, die vorteilhafte Ausbildungen der Prüfbaugruppe selbst betreffen, sind in den Unteransprüchen gekennzeichnet.

Nachstehend wird die Erfindung anhand eines Ausführungsbeispiels unter Bezugnahme auf eine Zeichnung näher erläutert. In der Zeichnung zeigen

Figur 1 die Struktur einer digitalen Zeitmultiplex-Fernmeldevermittlungsstelle, deren Bestandteil die erfindungsgemäße Schaltungsanordnung ist.

Figur 2 eine Koppleranordnung einer solchen Fernmeldevermittlungsstelle zusammen mit der erfindungsgemäß vorgesehenen Prüfbaugruppe.

Figur 3 die Prüfbaugruppe in mehr ins einzelne gehender Darstellung.

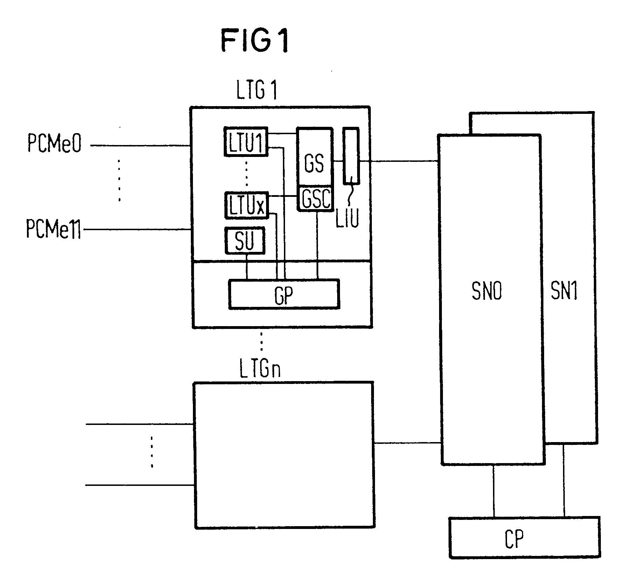

Die in Figur 1 dargestellte digitale Zeitmultiplex-Vermittlungsstelle besteht aus einer Reihe von Anschlußgruppen LTG1 bis LTGn, aus einem gedoppelten Koppelnetz SNO/SN1 sowie aus einem Koordinationsprozessor.

Die Anschlußgruppen LTG1 bis LTGn dienen dem Anschluß von Teilnehmeranschluß- und/oder Verbindungsleitungen PCMe0 bis PCMe11. Sie weisen Anschlußeinheiten LTU1 bis LTUx auf, die ihrerseits die hier nicht dargestellten Teilnehmersätze oder Leitungssätze enthalten. Weiterer Bestandteil der Anschlußgruppen sind eine Koppelanordnung GS mit eigener Kopplersteuerung GSC, die eine Vermittlung zwischen den auf den erwähnten Anschlußleitungen gebildeten Zeitkanälen und em zentralen Koppelnetz SNO/SN1 bewirkt. Ferner enthalten die Anschlußgruppen eine Signaleinheit SU sowie eine Schnittstelleneinheit LIU, die die Schnittstelle zwischen der Anschlußgruppe und dem Koppelnetz SNO/SN1 darstellt. Die Bestandteile der Anschlußgruppen stehen jeweils unter dem Steuereinfluß einer Gruppensteuerung GP, die ihrerseits über das zentrale Koppelnetz mit dem erwähnten Koordinationsprozessor CP also der Zentralsteuerung der Vermittlungsstelle kommuniziert.

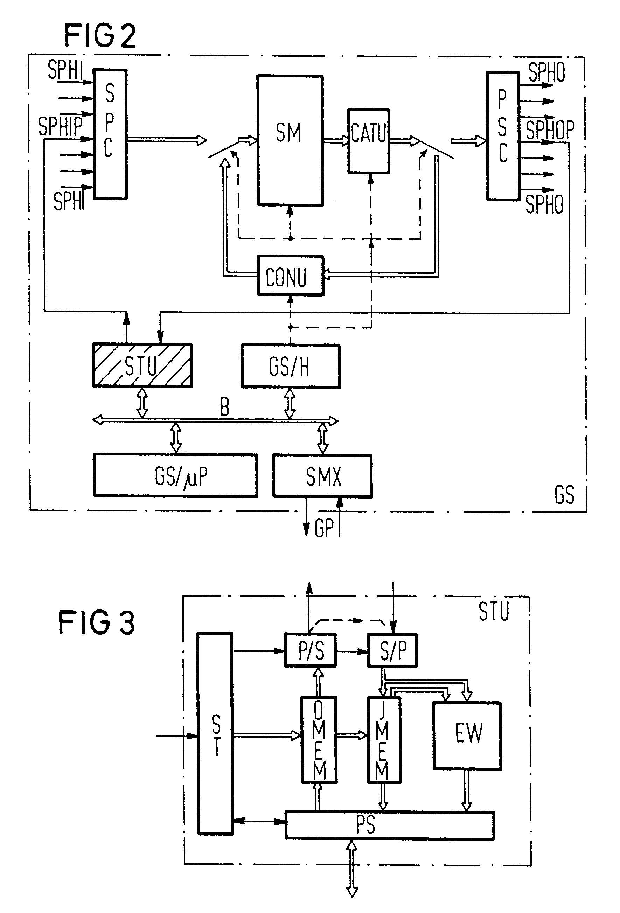

In der FIG 2 ist die Koppelanordnung GS in spezieller Ausführungsform mehr ins einzelne gehend dargestellt.

Kernstück dieser Koppelanordnung, die eine Zeitstufe darstellt, ist ein Sprachspeicher SM, an den eingangsseitig über einen Serien-Parallel-Wandler SPC Zeitmultiplexleitungen für kommende Übertragungsrichtung SPHI, die von Anschlußeinheiten LTU gemäß FIG 1 bzw. zu einem geringeren Teil von dem zentralen Koppelfeld SNO/SN1 kommend zu denken sind. Ausgangsseitig sind über einen Parallel-Serien-Wandler PSC Zeitmultiplexleitungen SPHO angeschlossen, die zu den erwähnten Anschlußeinheiten LTU bzw. zum zentralen Koppelfeld SNO/SN1 hinführend zu denken sind.

Die in FIG 1 mit GSC bezeichnete Kopplersteuerung ist in FIG 2 in eine Steuerung GS/H mit zugehörigem Haltespeicher und in einen Kopplersteuerungsmikroprozessor GS/»P gegliedert dargestellt.

Die genannte Steuerung beeinflußt außer dem Sprachspeicher ferner noch eine Einrichtung CATU, die der Dämpfung und ggfs. Codekonvertierung von Codedarstellung gemäß dem »-Gesetz in Codedarstellung gemäß dem A-Gesetz bzw. umgekehrt dient, sowie eine Konferenzeinrichtung CONU.

Die eigentliche gemäß der Erfindung vorgesehene Prüfbaugruppe ist in FIG 2 mit STU bezeichnet. Sie liegt in einer Leitungsschleife die von Multiplexleitungen SPHIP und SPHOP gebildet wird, die in gleicher Weise wie die erwähnten Multiplexleitungen SPHI und SPHO, auf denen Sprachinformationen übertragen werden, mit dem Serien-Parallel-Wandler SPC und dem Parallel-Serien-Wandler PSC und damit mit der Koppelanordnung in Verbindung stehen. Die Prüfbaugruppe STU hat damit zu diesen Zeitmultiplexleitung SPAIP und SPAOP hin eine serielle Schnittstelle aufzuweisen.

Wie die FIG 2 ferner zeigt, liegt die Prüfbaugruppe STU an einer Busleitung B, an der außerdem die erwähnten Teile GS/H und G/»P der Kopplersteuerung sowie ein Signalmultiplexer SMX angeschlossen sind, über den ein Signalisierungszeichenaustausch mit dem Koordinationsprozessor CP erfolgt. Die Prüfbaugruppe STU, die an den Bus B über eine Parallelschnittstelle angeschlossen ist, wird über diesen Bus von der Kopplersteuerung direkt beeinflußt.

In der FIG 3 sind die wesentlichen Bestandteile der Prüfbaugrppe STU dargestellt.

Es sind dies die schon erwähnte Parallelschnittstelle PS zum Bus B bzw. dem Mikroprozessor G/»P der Kopplersteuerung. Es sind dies ferner eine interne Steuerung St, deren wesentliche Aufgabe die Festlegung der Sende- uind Empfangszeitpunkte im Zusammenhang mit der Durchführung von Prüfungen ist, die von der Kopplersteuerung veranlaßt werden, sowie die Steuerung von im Zuge der Prüfung durchgeführten Soll/Ist-Vergleichen.

Die Prüfbaugruppe STU weist ferner einen Ausgabespeicher OMEM auf, von dem aus Daten über einen Parallel-Serien-Wandler P/S an die Prüfmultiplexleitung SPHIP in FIG 1 gelangen können, sowie einen Eingabespeicher IMEM, in den von der Prüfmultiplexleitung SPHOP in FIG 2 und über einen Serien-Parallel-Wandler S/P Daten eingeschrieben werden. Die die obenerwähnte Schnittstelle bildenden Serien-Parallelwandler und Parallel-Serienwandler sind so ausgestattet, daß eine Spiegelfunktion ausgeführt werden kann, also aus dem Speicher OMEM ausgelesene Daten direkt wieder zurück in den Speicher IMEM gelangen können.

Schließlich weist die Prüfbaugruppe STU eine Eingabendatenbewertung EW auf.

Mit der Prüfbaugruppe STU können sowohl normale Teilnehmerverbindungen als auch Konferenzverbindungen sowie Toneinblendungen in Konferenzverbindungen geprüft werden.

Zu Beginn einer Prüfung wird daher zunächst die Art der Prüfung festgelegt. Es folgt dann ein Eigentest der Prüfbaugruppe, wozu die erwähnte Spiegelfunktion geschaltet wird und von der Koppelfeldsteuerung über die Prozessorschnittstelle PS gelieferte Prüfdaten in den Ausgabespeicher OMEM eingeschrieben, von dort ausgelesen und über den Spiegel in den Eingabedatenspeicher IMEM eingetragen werden.

Nach Auflösen der Spiegelfunktion und Festlegung der Sende- und Empfangszeitlagen werden dann die Prüfdaten vom Speicher OMEM aus über die Koppelanordnung GS durchgeschaltet und über die ausgangsseitige Multiplexleitung SPHOP wieder an die Prüfbaugruppe STU zurückübertragen. Dort werden sie durch die Eingabedatenbewertungsbaugruppe EW mit im Zuge der erläuterten Spiegelung in den Speicher IMEM gelangten Daten, die die Soll-Daten darstellen, verglichen. Im Falle einer Abweichung erfolgt eine Meldung an die Kopplersteuerung GS.

Durch das erfindungsgemäße Konzept sind also im Gegensatz zu den bisherigen Verhältnissen die Steuerungsaufgaben von der Gruppensteuerung auf die Peripherie verlagert, wobei auch die Kopplersteuerung GSC weitgehend entlastet ist. Es sind daher Tests der Sprachkanäle in weitaus größerem Umfang möglich, wobei außerdem die Fehlererkennung sehr schnell erfolgt. Da auf der Multiplexleitung 32 Zeitschlitze zur Verfügung stehen, können der Sprachspeicher SM bzw. dessen Haltespeicher GS/H über ihre ganzen Speicherbereiche und nicht nur stichprobenartig geprüft werden.

## Patentansprüche

1. Digitale Zeitmultiplex-Fernsprech-Vermittlungsstelle mit einer Schaltungsanordnung (STU) zur Prüfung der Sprechwegedurchschaltung einer Koppelanordnung (GS), die Bestandteil einer Anschlußgruppe (LTG1 bis LTGn) für den Anschluß von Teilnehmeranschluß- und/oder Verbindungsleitungen (PCMe0 bis PCMe11) ist, die unter dem Steuereinfluß einer mit der Zentralsteuerung (CP) der Vermittlungsstelle kommunizierenden Gruppensteuerung (GP) steht, die ihrerseits die Koppelanordnung (GS) im Zusammenwirken mit einer Kopplersteuerung (GSC) und die übrigen Bestandteile der Anschlußgruppe direkt beeinflußt,
**gekennzeichnet** durch folgende Merkmale:
a) es ist eine gesonderte Prüfbaugruppe (STU) mit einer eigenen Steuerung (ST) vorgesehen,
b) die Prüfbaugruppe (STU) liegt in einer Leitungsschleife, die eine eingangsseitige und ausgangsseitige Prüfmultiplexleitung (SPHIP, SPHOP) umfaßt,
c) die Prüfmultiplexleitung (SPHOP, SPHOP) steht in gleicher Weise wie die Teilnehmeranschluß- und/oder Verbindungsleitungen (PCME0 bis PCME11) mit einem die Koppeleinrichtung der Koppelanordnung (GS) bildenden Sprachspeicher (SM) in Verbindung, indem die eingangsseitige Prüfmultiplexleitung (SPHIP) entsprechend den Teilen (SPHI) für ankommende Übertragungsrichtung der Teilnehmeranschluß- und/oder Verbindungsleitungen an einen Eingang eines dem Sprachspeicher (SM) vorgeschalteten Serien-Parallel-Wandlers (SPC) und die ausgangsseitige Prüfmultiplexleitung (SPHIP) entsprechend den abgehenden Teilen (SPHO) der Teilnehmeranschluß- und/oder Verbindungsleitungen an einen Ausgang eines dem Sprachspeicher (SM) nachgeschalteten Parallel-Serien-Wandlers (PSC) angeschlossen ist,
d) die Prüfbaugruppe (STU) führt auf Veranlassung der Kopplersteuerung (GSC) die Sprechwegeprüfung durch Vergleich von durch die Kopplersteuerung erzeugten und über die eingangsseitige Prüfmultiplexleitung (SPHIP) an den Sprachspeicher (SM) gelieferten Prüfbitmustern mit den entsprechenden über die ausgangsseitige Multiplexleitung (SPHOP) zurückkommenden Prüfbitmustern durch.

2. Vermittlungsstelle nach Anspruch 1,
**dadurch gekennzeichnet,**
daß die Prüfbaugruppe (STU) ferner folgende Bestandteile aufweist:
a) eine Schnittstelle (PS) zur Kopplersteuerung (GS/»P, GS/H)
b) eine Schnittstelle (P/S, S/P) zu der eingangsseitigen und ausgangsseitigen Prüfmultiplexleitung (SPHIP, SPHOP),
c) einen Sende- und einen Empfangsspeicher (OMEM, IMEM)
d) eine Baugruppe zur Eingabedatenbewertung (EW).

3. Vermittlungsstelle nach Anspruch 2,
**dadurch gekennzeichnet,**
daß die Schnittstelle der Prüfbaugruppe (STU) zur Prüfmultiplexleitung (SPHIP, SPHOP) eine serielle Schnittstelle (P/S, S/P) ist.

4. Vermittlungsstelle nach Anspruch 2 oder 3,
**dadurch gekennzeichnet,**
daß die Schnittstelle der Prüfbaugruppe (STU) zur Kopplersteuerung (GS/»P, GS/H) eine parallele Schnittstelle (PS) ist.

## Claims

1. Digital time-division multiplex telephone exchange, having a circuit arrangement (STU) for testing the through-connection of voice paths of a switching network (GS) which is a component part of a line trunk group (LTG1 to LTGn) for the connection of subscriber lines and/or junction lines (PCMe0 to PCMe11) which is under the controlling influence of a group processor (GP) which communicates with the central processor (CP) of the exchange and for its part influences the switching network (GS) in collaboration with a coupler processor (GSC) and influences the remaining component parts of the line trunk group directly, characterized by the following features:
a) a separate test assembly (STU) with its own processor (ST) is provided,
b) the test assembly (STU) lies in a line loop which comprises an input-side and output-side test multiplex line (SPHIP, SPHOP),
c) in the same way as the subscriber lines and/or junction lines (PCMe0 to PCMe11), the test multiplex line (SPHIP), (SPHOP) is connected to a voice memory (SM), forming the switching device of the switching network (GS), in that the input-side test multiplex line (SPHIP) is connected in accordance with the parts (SPHI) for the incoming transmission direction of the subscriber lines and/or junction lines to an input of a series-to-parallel converter (SPC), arranged upstream of the voice memory (SM), and the output-side test multiplex line (SPHOP) is connected in accordance with the outgoing parts (SPHO) of the subscriber lines and/or junction lines to an output of a parallel-to-series converter (PSC) arranged downstream of the voice memory (SM),
d) in response to the coupler processor (GSC), the test assembly (STU) carries out the voice path test by comparison of test bit patterns generated by the coupler processor and supplied to the voice memory (SM) via the input-side test multiplex line (SPHIP) with the corresponding test bit patterns returning via the output-side multiplex line (SPHOP).

2. Exchange according to Claim 1, characterized in that the test assembly (STU) also has the following component parts:
a) an interface (PS) to the coupler processor (GS/»P, GS/H)
b) an interface (P/S, S/P) to the input-side and output-side test multiplex line (SPHIP, SPHOP),
c) a sending memory and a receiving memory (OMEM, IMEM)
d) an assembly for input data weighting (EW).

3. Exchange according to Claim 2, characterized in that the interface of the test assembly (STU) to the test multiplex line (SPHIP, SPHOP) is a serial interface (P/S, S/P).

4. Exchange according to Claim 2 or 3, characterized in that the interface of the test assembly (STU) to the coupler processor (GS/»P, GS/H) is a parallel interface (PS).

## Revendications

1. Central téléphonique numérique à multiplexage temporel comportant un montage (STU), qui est destiné au contrôle de l'interconnexion des voies de conversation d'un réseau de connexion (GS), qui fait partie d'un groupe de raccordement (LTG1, LTGn) pour le raccordement de lignes d'abonnés et/ou de lignes de jonction (PCMe0 à PCMe11) et qui est sous la commande d'une commande de groupe (GP), communique avec la commande centrale (CP) du central et laquelle, pour sa part, influe directement sur le réseau de connexion (GS) en coopération avec la commande de coupleur (GSC), et sur les autres composants du groupe de raccordement,
caractérisé par les particularités suivantes :
a) il est prévu un module de contrôle distinct (STU) ayant une commande propre (ST),
b) le module de contrôle (STU) est dans une ligne en boucle, qui comprend une ligne de multiplexage de contrôle (SPHIP) côté entrée et une ligne de multiplexage de contrôle (SPHOP) côté sortie,
c) la ligne de multiplexage de contrôle (SPHIP, SPHOP) est reliée, de la même manière que les lignes d'abonnés et/ou les lignes de jonction (PCME0 à PCME11), à une mémoire de signaux vocaux (SM), qui forme le dispositif de connexion du réseau de connexion (GS), par le fait que la ligne de multiplexage de contrôle (SPHIP) côté entrée est raccordée en fonction des éléments (SPHI) pour le sens de transmission d'arrivée des lignes d'abonnés et/ou des lignes de jonction, à une entrée d'un convertisseur série/parallèle (SPC) branché en amont de la mémoire de signaux vocaux (SM), et la ligne de multiplexage de contrôle (SPHOP) côté sortie est raccordée, en fonction des éléments de départ (SPHO) des lignes d'abonnés et/ou de jonction, à une sortie d'un convertisseur parallèle-série (PSC) branché en aval de la mémoire de signaux vocaux (SM),
d) à la demande de la commande de coupleur (GSC), le module de contrôle (STU) effectue le contrôle des voies de conversation par comparaison de profils binaires de contrôle, qui sont produits par la commande du coupleur et qui sont fournis à la mémoire de signaux vocaux (SM) par l'intermédiaire de la ligne de multiplexage de contrôle (SPHIP) côté entrée, aux profils binaires de contrôle correspondants, qui reviennent par l'intermédiaire de la ligne de multiplexage (SPHOP) côté sortie.

2. Central suivant la revendication 1, caractérisé par le fait
que le module de contrôle (STU) comporte en outre les composants suivants :
a) une interface (PS) de liaison à la commande de coupleur (GS/»P, GS/H),
b) une interface (P/S, S/P) de liaison avec les lignes de multiplexage de contrôle (SPHIP, SPHOP) côté entrée et côté sortie,
c) une mémoire d'émission et une mémoire de réception (OMEM, IMEM),
d) un module d'exploitation (EW) de données d'entrée.

3. Central suivant la revendication 2, caractérisé par le fait que l'interface du module de contrôle (STU) de la ligne de multiplexage de contrôle (SPHIP, SPHOP) est une interface série (P/S, S/P).

4. Central suivant la revendication 2 ou 3, caractérisé par le fait que l'interface du module de contrôle (STU) avec la commande de coupleur (GS/»P, GS/H) est une interface parallèle (PS).
